Europäisches Patentamt

European Patent Office

Office européen des brevets

(11) Veröffentlichungsnummer: **0 070 382**
A1

# EUROPÄISCHE PATENTANMELDUNG

(21) Anmeldenummer: 82104838.6

(22) Anmeldetag: 02.06.82

(51) Int. Cl.³: **B 60 K 15/02**

(30) Priorität: 25.06.81 DE 3124956

(43) Veröffentlichungstag der Anmeldung: 26.01.83
Patentblatt 83/4

(84) Benannte Vertragsstaaten: AT DE FR GB IT

(71) Anmelder: **BAYERISCHE MOTOREN WERKE Aktiengesellschaft, Postfach 40 02 40 Petuelring 130, D-8000 München 40 (DE)**

(72) Erfinder: **Hauser, Günter, Andernacher Strasse 48, D-8000 München 50 (DE)**
Erfinder: **Houzvicka, Mllos-Karl, Erwin v.Steinbachweg 31/100, D-8000 München 45 (DE)**

(74) Vertreter: **Dexheimer, Rolf, Bayerische Motoren Werke Aktiengesellschaft Postfach 40 02 40 Petuelring 130 - AJ-31, D-8000 München 40 (DE)**

(54) Anlage zum Entlüften der Verdunstungsgase des Kraftstoffbehälters eines Kraftfahrzeuges.

(57) Die im Kraftstoffbehälter eines Motorrades entstehenden Verdunstungsgase des Kraftstoffes können das Schwimmernadelventil des Vergasers beeinflussen, wodurch bei Motorbetrieb die Abgaswerte verschlechtert werden können. Um dies zu vermeiden, ist erfindungsgemäß vorgesehen, daß von einer vom Kraftstoffbehälter (2) zum Kurbelgehäuse (1') des Motors (1) führenden Leitung (3) zwischen einem Druckventil (4) und dem Kraftstoffbehälter (2) eine mit einem Belüftungsventil (6) versehene Entlüftungsleitung (5) abzweigt, die zwischen Luftfilter (7) und Gemischaufbereitungssystem (8) in den Ansaugluftstrom einmündet. Bei Motorbetrieb wird das Belüftungsventil (6) durch den Zündstrom des Motorrades oder durch Unterdruck geöffnet, wodurch die im Kraftstoffbehälter vorhandenen, unter Überdruck stehenden Verdunstungsgase durch das Druckgefälle des Ansaugluftstromes abgesaugt und in diesen eingeleitet werden.

- 1 -

Anlage zum Entlüften der Verdunstungsgase des Kraftstoffbehälters eines Kraftfahrzeuges

Die Erfindung geht aus von einer Anlage der im Oberbegriff
des Anspruches 1 genannten und durch das DE-Gm 71 43 170
oder die DE-PS 19 42 963 bekanntgewordenen Art.

Der in einem Kraftstoffbehälter vorhandene Kraftstoff entwickelt Verdunstungsgase, sowie bei Erwärmung des Kraftstoffbehälters Dämpfe - insbesondere bei einem Motorrad
wegen der freien Anordnung des Kraftstoffbehälters - die
besonders bei vollgefülltem Kraftstoffbehälter bewirken,
daß der Kraftstoff mit erhöhtem Druck vom Kraftstoffbehälter eines Motorrades in die Schwimmerkammer des Vergasers
gelangt. Dies ist insbesondere nach Öffnen des Kraftstoffhahnes der Fall, weil sich dabei der im Kraftstoffbehälter
vorhandene Kraftstoff rasch entspannt; denn wie bekannt
wird bei einem Motorrad der Kraftstoff nicht wie bei einem
Personenkraftwagen oder dergleichen vom Kraftstoffbehälter
in die Schwimmerkammer des Vergasers durch eine Förderpumpe
und damit mit stets gleichbleibendem Druck eingespeist,
sondern gelangt (als sogenanntes Fallbenzin) durch Gefälledruck in die Schwimmerkammer. Durch einen in erwähnter Weise mit erhöhtem Druck in die Schwimmerkammer des Vergasers
eines Motorrades strömenden Kraftstoff kann das Schwimmernadelventil beaufschlagt werden und dadurch vom Kraftstoffbehälter eine bestimmte Menge Kraftstoff in die Schwimmerkammer fließen, wodurch ein sehr fettes Kraftstoff-Luft-Gemisch entsteht.

Durch ein solches können jedoch - neben der Kraftstoffverschwendung - die Abgaswerte derart verschlechtert werden, daß die in manchen Ländern geltenden, sehr strengen Abgasvorschriften kaum mehr erfüllt werden.

Beim eingangs genannten Stand der Technik ist jeweils dem Kraftstoffbehälter ein Ausgleichsbehälter nachgeordnet, von dem aus eine Entlüftungsleitung unter Zwischenschaltung einer ein Druckventil aufweisenden Ventileinheit zum Kurbelgehäuse des Motores führt. In dieses werden die Verdunstungsgase des Kraftstoffes, welche sich bis zum Ansprechen des auf einen bestimmten Überdruck eingestellten Druckventiles im Kraftstoffbehälter sammeln, sowohl bei Motorbetrieb als auch bei Motorstillstand eingeleitet, von wo aus sie über die Kurbelgehäuseentlüftung in das Saugrohr des Motors gelangen. Da somit im Kraftstoffbehälter der bekannten Anlage ständig (also auch bei Motorbetrieb) ein Überdruck herrscht, würden bei deren Verwendung in einem Motorrad aufgrund der eingangs geschilderten Umstände bei Motorbetrieb die vorerwähnten Nachteile hinsichtlich der Umweltbelastung entstehen.

Bei Einleitung der Verdunstungsgase in den Luftfilter des Motors — wie in dem DE-Gm 71 43 170 vorgeschlagen - gelangen diese bei Motorstillstand in die Atmosphäre, wodurch ebenfalls die Umwelt in unerwünschter Weise belastet wird.

Aufgabe der Erfindung ist es daher, eine Anlage der eingangs genannten Art mit geringstem Aufwand derart auszubilden, daß durch die in einem Kraftstoffbehälter — insbesondere in einem Kraftstoffbehälter eines Motorrades — entstehenden Verdunstungsgase sich bei Motorbetrieb kein Überdruck bilden kann.

Zur Lösung der Aufgabe sind die im kennzeichnenden Teil
des Anspruches 1 angegebenen Gestaltungsmerkmale vorgesehen.

Durch die erfindungsgemäß angeordnete Entlüftungsleitung
erfolgt bei Motorbetrieb in einfacher- und kostengünstiger Weise zusätzlich zur Kurbelgehäuseentlüftung eine
Absaugung der Verdunstungsgase aus dem Kraftstoffbehälter
durch das zwischen Luftfilter und Gemischaufbereitungssystem herrschende Druckgefälle, wobei die Verdunstungsgase den Verbrennungsgasen des Motors zugeführt werden.
Da somit im Kraftstoffbehälter bei Motorbetrieb kein
Überdruck entstehen kann, ist hierbei eine unmittelbare
Umweltbelastung ausgeschlossen.

Die zur Betätigung des Belüftungsventil vorgesehenen
Steuerorgane gemäß den Merkmalen der Ansprüche 2
und 3 können unkompliziert und mit geringem Kostenaufwand vorgesehen werden.

Durch die Anordnung der Leitung gemäß dem Merkmal des
Anspruches 4 wird der Kraftstofftank in einfacher Weise
entlüftet.

Weitere Ausgestaltungen der Erfindung sind in den Unteransprüchen gekennzeichnet.

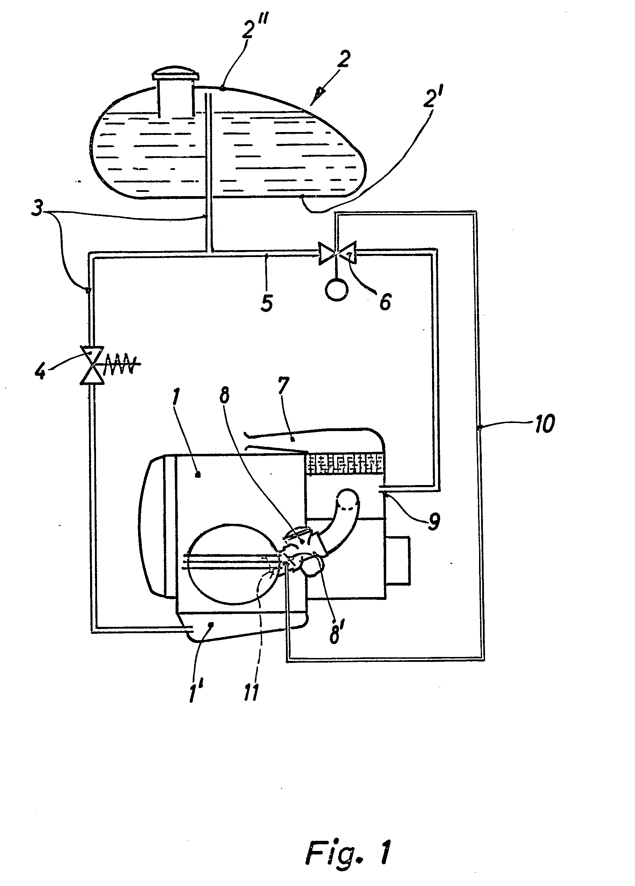

Ein Ausführungsbeispiel der Erfindung ist in der Zeichnung dargestellt. Es zeigt:
Figur 1
die erfindungsgemäße, für den Einbau in ein Motorrad
vorgesehene Anlage,
Figur 2
eine abgewandelte Ausführungsform von Figur 1.

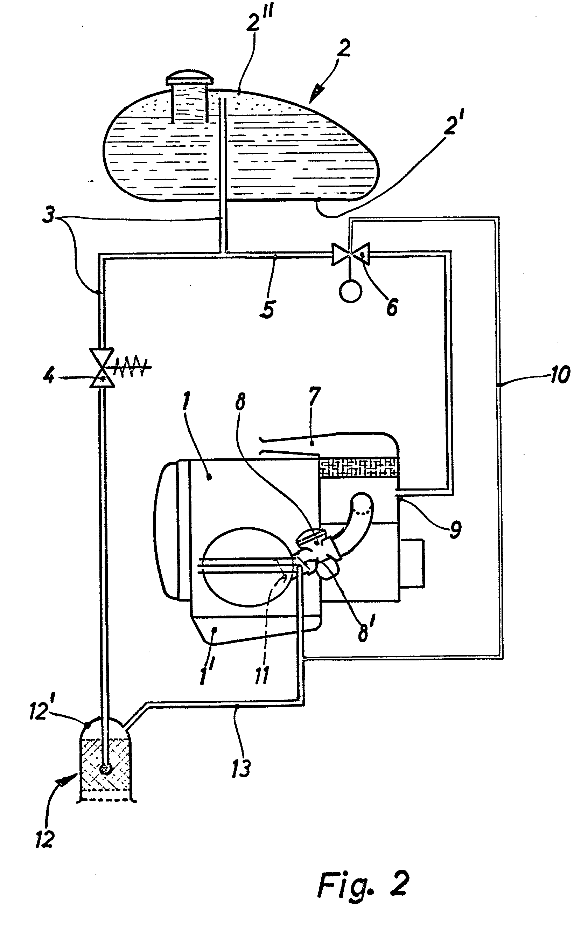

In Figur 1 ist der in einem Motorrad angeordnete Motor 1 mit Kraftstoffbehälter 2 dargestellt, von den eine Leitung 3 unter Zwischenschaltung eines einstellbaren Druckventiles 4 zum Kurbelgehäuse 1' des Motors 1 führt. Zwischen dem Kraftstoffbehälter 2 und dem Druckventil 4 zweigt von der den Boden 2' des Kraftstoffbehälters 2 in dessen Längsmittelbereich durchdringenden und etwa senkrecht verlaufend sich bis nahe zu dessen Deckwandung 2" erstreckenden Leitung 3 eine Entlüftungsleitung 5 ab, die mit einem Belüftungsventil 6 versehen ist. Die Entlüftungsleitung 5 mündet andererseits zwischen dem Luftfilter 7 und dem Vergaser 8 des Motors 1 in Strömungsrichtung des Ansaugluftstromes unmittelbar nach dem Luftfilter 7 (bei 9) in den unter Unterdruck stehenden Ansaugluftstrom ein. Das Belüftungsventil 6 kann als ein elektromagnetisches Ventil ausgebildet sein, das über einen nicht dargestellten elektrischen Leiter durch den Zündstrom des Motorrades betätigt wird. Ferner kann das Belüftungsventil 6 durch Unterdruck über eine Steuerleitung 10 betätigt werden, die von einem großen Unterdruckbereich des Motors 1, nämlich zwischen der Drosselklappe 8' des Vergasers 8 und dem Einlaßventil 11 des Motors 1 wegführt (Figur 1 und 2).

Beim Ausführungsbeispiel nach Figur 2 ist die Leitung 3 mit dem Gehäuse 12' eines Aktivkohlefilters 12 verbunden, von dessen Gehäuse 12' eine Verbindungsleitung 13 wegführt, die zwischen der Drosselklappe 8' des Vergasers 8 und dem Einlaßventil 11 des Motors 1 in dessen Ansaugkanal einmündet. Da die Verbindungsleitung 13 bei Motorbetrieb durch den Unterdruck des Ansaugkanales unter Unterdruck steht, kann von ihr die Steuerleitung 10 abzweigen, über welche das Belüftungsventil 6 durch Unterdruck betätigt wird.

- 5 -

Die Wirkungsweise der erfindungsgemäßen Anlage ist
folgende:

<u>a) bei Motorstillstand (Figur 1)</u>

Der im Kraftstoffbehälter 2 vorhandene Kraftstoff entwickelt Verdunstungsgase und bei Erwärmung Dämpfe, die
in die Leitung 3 bis zu dem auf etwa 0,3 bar eingestellten Druckventil 4 eingeleitet werden. Übersteigt der
Druck der Verdunstungsgase im Kraftstoffbehälter 2 den
Einstellwert des Druckventiles 4 (0,3 bar) so wird dieses geöffnet und die Verdunstungsgase werden in das Kurbelgehäuse 1' des Motors 1 eingeleitet. Von hier aus
strömen die Verdunstungsgase über die Kurbelgehäuseentlüftung in das Saugrohr des Motors 1.

Beim Ausführungsbeispiel nach <u>Figur 2</u> gelangen dagegen
die Verdunstungsgase in das Gehäuse 12' eines bekannten
Aktivkohlefilters 12, dessen Aktivkohle durch den in der
Verbindungsleitung 13 bei Motorbetrieb herrschenden Unterdruck reaktiviert wird.

<u>b) bei Motorbetrieb (Figur 1 und 2)</u>

Sobald der Motor 1 gestartet wird, wird das Belüftungsventil 6 - entsprechend seiner Ausbildung entweder durch
den Zündstrom des Motorrades oder durch den Unterdruck
in der Saugleitung 10 - geöffnet, wodurch die im Kraftstoffbehälter 2 vorhandenen, unter Überdruck stehenden
Verdunstungsgase durch das in der Entlüftungsleitung 5
und nach **Ö**ffnen des Belüftungsventiles 6 in der sich an
diese anschließenden Leitung 3 herrschende  Druckgefälle -
das durch den Ansaugluftstrom zwischen Luftfilter 7 und
Vergaser 8 besteht - abgesaugt  und in den Ansaugluftstrom des Motors 1 eingeleitet werden.

- 6 -

Da somit im Kraftstoffbehälter 2 unmittelbar nach dem
Anlassen des Motors 1 kein Überdruck mehr vorhanden
ist, wird der Kraftstoff nicht mit erhöhtem Druck in
die Schwimmerkammer des Vergasers 8 eingespeist; somit
kann das Schwimmernadelventil nicht in eingangs geschildeter Weise beaufschlagt werden.

Patentansprüche:

1. Anlage zum Entlüften der Verdunstungsgase des Kraftstoffbehälters eines Kraftfahrzeuges, insbesondere eines Motorrades, wobei der Kraftstoffbehälter über eine vom Bereich seiner Deckwandung wegführenden Leitung unter Zwischenschaltung eines Druckventils mit einem Ansaugsystem in Verbindung steht, in das die Verdunstungsgase bei Motorstillstand ab einem definierten Überdruck eingeleitet werden, während von einer Leitung zwischen dem Kraftstoffbehälter und dem Druckventil eine mit einem Belüftungsventil versehene Entlüftungsleitung abzweigt, dadurch gekennzeichnet, daß die Entlüftungsleitung (5) andererseits im Bereich zwischen Luftfilter (7) und Gemischaufbereitungssystem in den Ansaugluftstrom einmündet und das Belüftungsventil (6) bei Motorbetrieb zwangsgeöffnet ist.

2. Anlage nach Anspruch 1, dadurch gekennzeichnet, daß das Belüftungsventil (6) als ein elektromagnetisches Ventil ausgebildet ist, das durch den Zündstrom des Motors betätigt wird.

3. Anlage nach Anspruch 1, dadurch gekennzeichnet, daß das Belüftungsventil (6) durch Unterdruck, mittels einer vom Bereich nach der Drosselklappe (8') des Vergasers (8) wegführenden Steuerleitung (10) betätigt wird.

- 2 -

4. Anlage nach Anspruch 1, dadurch gekennzeichnet, daß die Leitung (3) den Boden (2') des Kraftstoffbehälters (2) in dessen Längsmittelbereich durchdringt u. etwa senkrecht verlaufend sich bis nahe zu dessen Deckwandung (2'') erstreckt.

5. Anlage nach den Ansprüchen 1 oder 4, dadurch gekennzeichnet, daß die Leitung (3) mit dem Kurbelgehäuse (1') des Motores (1) verbunden ist.

6. Anlage nach den Ansprüchen 1 oder 4, dadurch gekennzeichnet, daß die Leitung (3) mit dem Gehäuse (12') eines Aktivkohlefilters (12) verbunden ist, von dem eine Verbindungsleitung (13) zum Ansaugkanal des Motores (1) führt, welche im Bereich/zwischen der Drosselklappe (8') des Vergasers (8) und dem Einlaßventil (11) des Motores einmündet.

Fig. 1

Fig. 2

# EUROPÄISCHER RECHERCHENBERICHT

**Europäisches Patentamt**

00**70382** Nummer der Anmeldung

EP 82104838.6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A1 - 2 612 300 (NISSAN MOTOR CO., LTD.) <br><br> * Fig.; Seite 8, Zeile 19 - Seite 9, Zeile 15; Anspruch 4 * <br><br> -- | 1,3 |
| A | DE - A1 - 2 547 065 (ROBERT BOSCH GMBH) <br><br> * Ansprüche; Fig. 1 * <br><br> -- | 1 |
| D,A | DE - B - 1 942 963 (DAIMLER-BENZ) <br><br> ---- | |

### KLASSIFIKATION DER ANMELDUNG (Int. Cl.³)

B 60 K 15/02

### RECHERCHIERTE SACHGEBIETE (Int. Cl.³)

B 60 K 15/00

### KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| WIEN | 01-10-1982 | DENK |

EPA form 1503.1   06.78